# EUROPEAN PATENT APPLICATION

(11) **EP 4 485 360 A1**
(43) Date of publication of application: **01.01.2025**
(21) Application number: 23275098.4
(22) Date of filing: 30.06.2023
(51) Int. Cl.: G06T 7/73

(54) **POSE ESTIMATION OF AIRCRAFT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to pose estimation of aircraft, in particular to pose estimation of aircraft using machine learning. According to an aspect of the present invention, there is provided a computer-implemented method for performing pose estimation of aircraft. The method comprises: obtaining an input image; and using a machine-learning aircraft pose estimation model to obtain one or more aircraft parameters associated with one or more aircraft in the input image.

## Description

### FIELD

The present invention relates to pose estimation of aircraft, in particular using machine learning.

### BACKGROUND

Automated methods for estimating the pose of aircraft, for example the position and orientation of an aircraft in an image, typically involve using shape recognition to detect specific parts of the aircraft such as the nose, wingtips and so on. However, such methods may not reliably determine the aircraft's actual orientation, particularly in cases where the aircraft is further away from the camera and therefore only occupies a small portion of the image.

### SUMMARY

According to a first aspect of the present invention, there is provided a computer-implemented image processing method for performing pose estimation of aircraft, the method comprising: obtaining an input image; and using a machine-learning aircraft pose estimation model to obtain one or more aircraft parameters associated with one or more aircraft in the input image.

In some embodiments according to the first aspect, the input image is an image that may contain said one or more aircraft or may not contain any aircraft, wherein an output of the aircraft pose estimation model is indicative of whether the image does contain said one or more aircraft, and in the event that the output of the aircraft pose estimation model indicates that the image does contain said one or more aircraft, the image classification is further indicative of said one or more aircraft parameters.

In some embodiments according to the first aspect, said one or more aircraft parameters are indicative of one or more of:
a range to a respective one of said one or more aircraft;
an aircraft type of a respective one of said one or more aircraft;
an orientation of a respective one of said one or more aircraft; and
a position of a respective one of said one or more aircraft.

In some embodiments according to the first aspect, the machine-learning aircraft pose estimation model comprises: a segmentation stage configured to output a mask defining which pixels in the input image are estimated to be part of said one or more aircraft and which pixels in the input image are estimated to be part of a background; and/or a position determining stage configured to determine the position of each of said one or more aircraft in the input image; and/or an orientation determining stage configured to determine the orientation of each of said one or more aircraft in the input image.

In some embodiments according to the first aspect, the position determining stage is further configured to determine the range to each of said one or more aircraft.

In some embodiments according to the first aspect, for each one of said one or more aircraft the position determining stage is configured to determine the range to said aircraft based on the mask outputted by the segmentation stage, by: determining a distance for each one of the plurality of pixels that are estimated to be part of said aircraft, based on the mask; and determining the range to said aircraft based on an average of the determined distances for each one of said plurality of pixels.

In some embodiments according to the first aspect, the position determining stage is configured to determine the range to each of said one or more aircraft by assigning a same predetermined distance to all pixels in the mask that are estimated to be part of the background.

In some embodiments according to the first aspect, the orientation determining stage is configured to output the orientation of each of said one or more aircraft in the form of a quaternion.

In some embodiments according to the first aspect, the segmentation stage is configured to determine the aircraft type of a respective one of said one or more aircraft.

In some embodiments according to the first aspect, the machine-learning aircraft pose estimation model is configured to use centre voting to determine the position of each of said one or more aircraft.

In some embodiments according to the first aspect, the machine-learning aircraft pose estimation model is configured to determine the position of each of said one or more aircraft in terms of x, y coordinates by: determining the x coordinate by counting a number of votes for each one of a plurality of vertical lines in the image, and determining the x coordinate based on a position along the x axis of the vertical line having the most votes among the plurality of vertical lines; and determining the y coordinate by counting a number of votes for each one of a plurality of horizontal lines in the image, and determining the y coordinate based on a position along the y axis of the horizontal line having the most votes among the plurality of horizontal lines.

In some embodiments according to the first aspect, obtaining the input image comprises: obtaining an initial image having a larger size than the input image; applying a shape recognition algorithm to determine one or more regions of interest, ROIs, in the initial image; and extracting part of the initial image containing one or more of said ROIs as the input image to be classified by the machine learning aircraft pose estimation model.

In some embodiments according to the first aspect, the machine-learning aircraft pose estimation model is configured to detect one or more visual cues associated with heavy manoeuvring by one of said one or more aircraft and to output an indication of whether any such visual cues were detected, wherein heavy manoeuvring involves a change in velocity and/or direction of travel that exceeds a threshold.

In some embodiments according to the first aspect, the method comprises displaying a graphical indication of heavy manoeuvring on an on-screen display, in response to the machine learning aircraft pose estimation model outputting an indication that one or more such visual cues were detected.

In some embodiments according to the first aspect, the method is implemented by one or more computer systems onboard an aircraft, for detecting one or more other aircraft substantially in real-time.

In some embodiments according to the first aspect, the input image comprises a part or a whole of an image captured by an imaging system onboard said aircraft in which the method is implemented.

According to a second aspect of the present invention, there is provided a computer program comprising instructions which, when the program is executed by a computer, cause the computer to carry out a method according to the first aspect.

According to a third aspect of the present invention, there is provided a non-transitory computer-readable storage medium having stored thereon a computer program according to the second aspect.

According to a fourth aspect of the present invention, there is provided a system comprising: one or more processors; and computer-readable memory storing computer program instructions which, when executed by the one or more processors, cause the system to: obtain an input image; and use a machine-learning aircraft pose estimation model to one or more aircraft parameters associated with one or more aircraft in the input image.

In some embodiments according to the fourth aspect, the input image is an image that may contain said one or more aircraft or may not contain any aircraft, wherein an output of the aircraft pose estimation model is indicative of whether the image does contain said one or more aircraft, and in the event that the output of the aircraft pose estimation model indicates that the image does contain said one or more aircraft, said output is further indicative of said one or more aircraft parameters.

In some embodiments according to the fourth aspect, said one or more aircraft parameters are indicative of one or more of:
a range to a respective one of said one or more aircraft;
an aircraft type of a respective one of said one or more aircraft;
an orientation of a respective one of said one or more aircraft; and
a position of a respective one of said one or more aircraft.

In some embodiments according to the fourth aspect, the machine-learning aircraft pose estimation model comprises: a segmentation stage configured to output a mask defining which pixels in the input image are estimated to be part of said one or more aircraft and which pixels in the input image are estimated to be part of a background; and/or a position determining stage configured to determine the position of each of said one or more aircraft in the input image; and/or an orientation determining stage configured to determine the orientation of each of said one or more aircraft in the input image.

In some embodiments according to the fourth aspect, the machine-learning aircraft pose estimation model is configured to detect one or more visual cues associated with heavy manoeuvring by one of said one or more aircraft and to output an indication of whether any such visual cues were detected, wherein heavy manoeuvring involves a change in velocity and/or direction of travel that exceeds a threshold.

In some embodiments according to the fourth aspect, the system comprises a computer system onboard an aircraft for detecting one or more other aircraft substantially in real-time.

In some embodiments according to the fourth aspect, the aircraft comprising said computer system further comprises an onboard imaging system, wherein the input image comprises a part or a whole of an image captured by the imaging system.

### BRIEF DESCRIPTION OF THE FIGURES

Embodiments of the invention will now be described by way of example only with reference to the figures, in which:
Figure 1 is a flowchart showing a computer-implemented image processing method for performing pose estimation of aircraft;
Figure 2 schematically illustrates apparatus for performing any of the method described herein;
Figure 3 shows a structure of a machine-learning aircraft pose estimation model for use in a computer-implemented image processing method;
Figure 4 shows an example of an image containing an aircraft, and an example of a mask obtained from said image;
Figure 5 is a flowchart showing a pre-processing method for obtaining an input image to be classified by a machine-learning aircraft pose estimation model;
Figure 6 shows an example of an image containing an aircraft, and an example of an input image having a smaller size extracted from said image; and
Figure 7 is a flowchart showing a method of determining a range to an aircraft based on a mask obtained from an image of said aircraft.

### DETAILED DESCRIPTION

This specification describes systems, apparatus and methods for pose estimation of aircraft. The techniques described herein can be used to estimate the pose of an aircraft based on an input image of the aircraft. For example, the input image may comprise an image that has been captured by a camera onboard another aircraft, the image containing a part or a whole of the aircraft whose pose is to be estimated.

Embodiments of the invention may be implemented by one or more computer systems onboard an aircraft, for detecting one or more other aircraft substantially in real-time. In such embodiments, the input image may comprise a part or a whole of an image captured by an imaging system onboard the aircraft in which the method is implemented. The invention is not limited to such implementations, however. For example, in other embodiments the techniques disclosed herein can be implemented in a virtual environment, such as a simulator used for training aircraft pilots or other crew members.

The input image is processed using a machine learning aircraft pose estimation model, to obtain one or more aircraft parameters associated with the aircraft in the input image. The one or more aircraft parameters may be indicative of different aircraft poses, where "pose" can be understood as referring to one or more of the position of the aircraft (i.e. its position in three-dimensional space), the orientation of the aircraft, and the distance between the aircraft and the camera (which may also be referred to as the "range" to the aircraft). Collectively, these parameters may be referred to as the "pose parameters" associated with that aircraft. In some embodiments, the aircraft parameters may include one or more parameters that are indicative of other properties of the aircraft than its pose, such as the aircraft type (e.g. defined in terms of the aircraft make/model/size/shape etc.).

Depending on the embodiment, the machine learning aircraft pose estimation model may output a single pose parameter, for example the range to the aircraft, or may output a set of values of a plurality of pose parameters, for example the range, orientation, position and aircraft type. Therefore, in general terms, the machine learning aircraft pose estimation model can be configured to obtain one or more pose parameters associated with the aircraft.

The machine learning aircraft pose estimation model can be configured to process the input image by solving a regression problem to obtain the one or more aircraft parameters. Here, a 'regression problem' refers to the use of a model to predict continuous outcomes or values. The aircraft parameters, including any pose parameters, may each take the form of a number that can be any point on a floating point line.

In some embodiments, the machine learning aircraft pose estimation model is configured to perform segmentation in addition to, or instead of, regression. Here, 'segmentation' refers to the process of dividing an image into segments according to the content of the image. For example, the machine learning aircraft pose estimation model may be configured to perform image semantic segmentation, which involves classifying each pixel in an image into one out of a set of predefined classes (e.g. 'aircraft' or 'background'). Nearby pixels will typically be of the same class as each other, hence, pixel-by-pixel classification in this way tends to produce an output in which the image is divided into segments each containing a plurality of pixels.

Prior to using the machine learning aircraft pose estimation model to process an input image as described above, the model can first be trained on a dataset comprising a variety of different images. For example, the model may be trained using a plurality of images of aircraft against different types of background, such as cluttered backgrounds, naive backgrounds (e.g. 100% grey), white noise backgrounds, real-world backgrounds comprising images of the ground, sea, or sky, or a combination of any of the sky, sea, and ground (optionally including images with the horizon shown in different positions/orientations in the image). The images used for training may comprise images with different lighting conditions (e.g. images taken at different times of the day; images with different positions of the sun relative to the camera; images with different levels of cloud cover leading to different ambient light conditions, etc.), and/or may comprise images in which an aircraft is partially occluded (e.g. by cloud, terrain, or another aircraft), and/or may comprise images of the same type of aircraft in different configurations (e.g. carrying different equipment, drop tanks, different paint schemes, etc.). In some embodiments, noise may be added to some or all of the training images, so as to train the aircraft pose estimation model to be more robust to noise in an input image.

In some embodiments, some or all of the images used for training the model may be computer-generated images, as opposed to being photographs of actual aircraft. One advantage of training the model on computer-generated images is that the truth data, namely the values of the one or more pose parameters associated with the aircraft in each image, can be precisely known for each training image. This in turn can help to increase the accuracy of the trained model, in terms of the ability of the model to correctly segment and/or regress any given input image. By comparison, when an aircraft pose estimation model is trained solely on real-world photographs of aircraft, it may not always be possible to know with a high degree of accuracy the correct values of the pose parameter(s) for the aircraft in any given training image. Consequently, the truth data for real-world images may not be as accurate as for computer-generated images.

To improve the accuracy of the trained model further, in some embodiments the images used for training may comprise a set of images with different placement of the aircraft within the field of view (FOV) in each image, and/or different orientations of the aircraft (e.g. images of aircraft with different values of roll, pitch and/or yaw). Here, "different placement" should be understood as encompassing both different positions of the aircraft within the plane of the image (i.e. x and y coordinates), and in terms of the range to the aircraft (i.e. z coordinate, depth). Training the model in this way, using a variety of images with aircraft in different positions and orientations, can further improve the reliability and robustness of the aircraft pose estimation model when used to process real-world images.

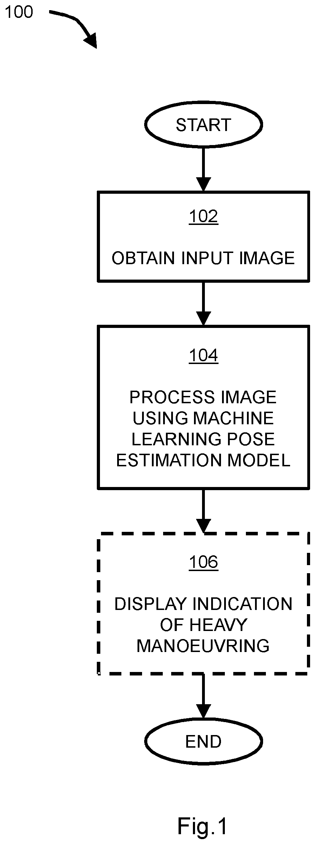

Referring now to Fig. 1, a flowchart is illustrated showing a computer-implemented image processing method 100 for performing pose estimation of aircraft, according to an embodiment of the present invention. The method may be performed by one or more computers operating in one or more locations.

First, in step 102 an input image is obtained. Then, in step 104 a machine learning aircraft pose estimation model is used to process the input image to obtain one or more aircraft parameters associated with one or more aircraft in the input image.

In some embodiments, the input image is an image that may contain said one or more aircraft or may not contain any aircraft. In other words, it may not be known in advance (i.e. prior to processing the input image using the aircraft pose estimation model) whether or not any given input image does in fact contain any aircraft. In such embodiments, an output of the aircraft pose estimation model can be indicative of whether the image contains one or more aircraft. In the event that the aircraft pose estimation model determines that the image does contain one or more aircraft, the aircraft pose estimation model outputs said one or more aircraft parameters.

In some embodiments, instead of being configured to receive an input image that may or may not contain any aircraft, the aircraft pose estimation model may be configured to receive an input image that is already known to contain at least one aircraft. For example, this may be possible in embodiments in which images are pre-processed to select only those images that contain aircraft, for instance by using a shape recognition algorithm to filter out images that do not contain aircraft. Pre-processing images in this way, such that only those images that contain one or more aircraft are sent to the aircraft pose estimation model to be classified, can help to conserve system resources by avoiding a situation in which the aircraft pose estimation model attempts to classify an image that does not in fact contain any aircraft.

In some embodiments, the method may end after step 104, i.e. once the input image has been processed and the values of the one or more aircraft parameters have been determined. As described above, the one or more aircraft parameters may include pose parameters indicative of one or more of: a range to a respective one of said one or more aircraft; an aircraft type of a respective one of said one or more aircraft; an orientation of a respective one of said one or more aircraft; and a position of a respective one of said one or more aircraft.

In some embodiments, the position and/or orientation of another aircraft may first be determined relative to the camera used to capture the image, for example, relative to the aircraft in which the method is implemented using images captured by an onboard camera system. Then, a relatively simple coordinate translation can be performed based on the known attitude (i.e. orientation) and position of the aircraft in which the method is implemented, to allow an operator (e.g. the pilot) to be presented with the heading, position, and orientation of the tracked aircraft in absolute terms (e.g. relative to earth axes).

In some embodiments, instead of or in addition to the aircraft parameters described above (e.g. range; aircraft type; orientation; position), the machine learning aircraft pose estimation model can be configured to detect one or more visual cues associated with heavy manoeuvring by an aircraft contained in the input image. Here, the term "heavy manoeuvring" refers to a change in velocity and/or direction of travel that exceeds a threshold. Examples of visual cues associated with heavy manoeuvring include, but are not limited to condensation wake, airbrake deployment, and activation of afterburners.

In embodiments in which visual cues associated with heavy manoeuvring can be detected, the method may optionally proceed to step 106 and output an indication of whether any such visual cues were detected. The indication of whether visual cues of heavy manoeuvring were detected may be outputted in various forms, depending on the implementation. For example, in some embodiments in step 106 a graphical indication of heavy manoeuvring may be displayed on an on-screen display, in response to the machine learning aircraft pose estimation model outputting an indication that one or more such visual cues were detected. For example, outputting an indication of heavy manoeuvring may be particularly advantageous in a situation where one or more aircraft are visible within the field of view of the onboard camera(s), by allowing an operator (e.g. the pilot) to quickly and easily identify those aircraft that are currently performing heavy manoeuvring, since such aircraft may potentially pose a greater threat (e.g. higher risk of mid-air collision) compared to slower-manoeuvring aircraft.

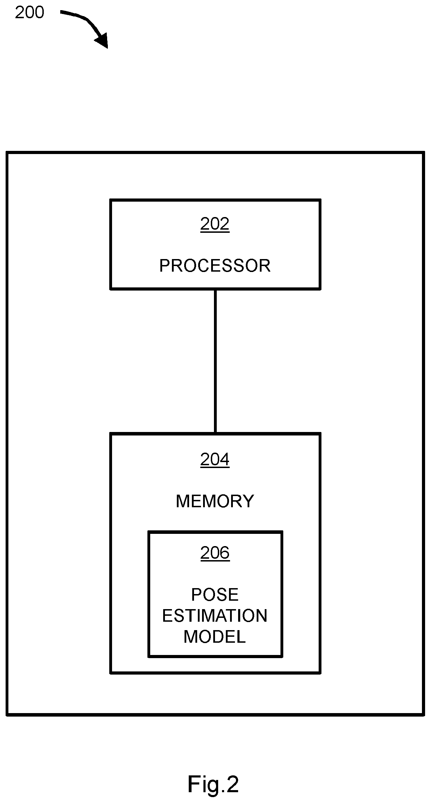

Referring now to Fig. 2, an apparatus for performing any of the method described herein is schematically illustrated, according to an embodiment of the present invention.

The apparatus (or system) 200 comprises one or more processors 202. The one or more processors 202 control operation of other components of the system/apparatus 200. The one or more processors 202 may, for example, comprise a general-purpose processor. The one or more processors 202 may be a single core device or a multiple core device. The one or more processors 202 may comprise a Central Processing Unit (CPU) or a graphical processing unit (GPU). Alternatively, the one or more processors 202 may comprise specialised processing hardware, for instance a Reduced Instruction Set Computer (RISC) processor or programmable hardware with embedded firmware. Multiple processors may be included.

The system/apparatus 200 comprises a memory 204. The memory 204 may comprise a working or volatile memory. The one or more processors may access the volatile memory in order to process data and may control the storage of data in memory. The volatile memory may comprise Random Access Memory (RAM) of any type, for example GPU RAM, Static RAM (SRAM), Dynamic RAM (DRAM), or it may comprise Flash memory, such as an SD-Card.

The memory 204 may comprise a non-volatile memory, which may also be referred to as non-transitory memory. The non-volatile memory stores a set of operating instructions for controlling the operation of the one or more processors 202 in the form of computer-readable instructions. The non-volatile memory may be a memory of any kind such as a Read Only Memory (ROM), a Flash memory or a magnetic drive memory.

The one or more processors 202 are configured to execute operating instructions to cause the system/apparatus 200 to perform any of the methods described herein. The operating instructions may comprise code (i.e. drivers) relating to the hardware components of the system/apparatus 200, as well as code relating to the basic operation of the system/apparatus 200. Generally speaking, the one or more processors 202 execute one or more instructions of the operating instructions, which are stored permanently or semi-permanently in the non-volatile memory, using the volatile memory to temporarily store data generated during execution of said operating instructions.

The operating instructions stored in the memory 204 include a machine learning aircraft pose estimation model 206. The aircraft pose estimation model 206 can be used to process an input image using any of the methods described herein. In some embodiments, the apparatus 200 may comprise one or more cameras for capturing input images to be processed using the aircraft pose estimation model 206. In other embodiments, the aircraft pose estimation model 206 may be used to process input images that have been obtained via other means, for example, images that have been captured by one or more cameras remote from the system/apparatus 200, or images that have been retrieved from a data store (e.g. a server that is communicatively coupled to the system/apparatus 200).

Implementations of the methods described herein may be realised as in digital electronic circuitry, integrated circuitry, specially designed Application Specific Integrated Circuits (ASICs), computer hardware, firmware, software, and/or combinations thereof. These may include computer program products (such as software stored on e.g. magnetic discs, optical disks, memory, Programmable Logic Devices) comprising computer readable instructions that, when executed by a computer, such as that described in relation to Figure 2, cause the computer to perform one or more of the methods described herein.

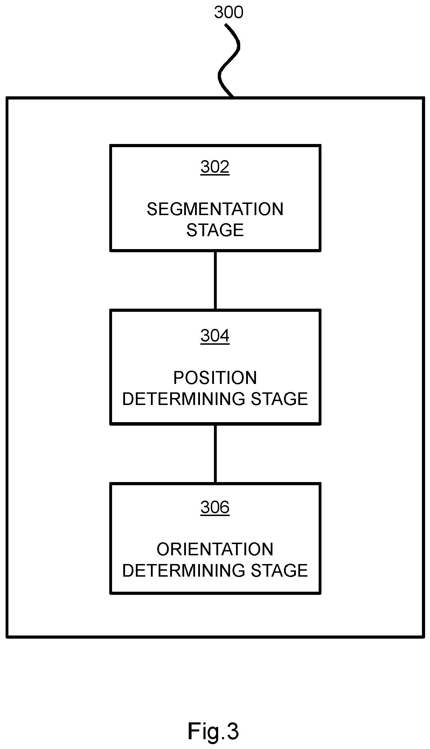

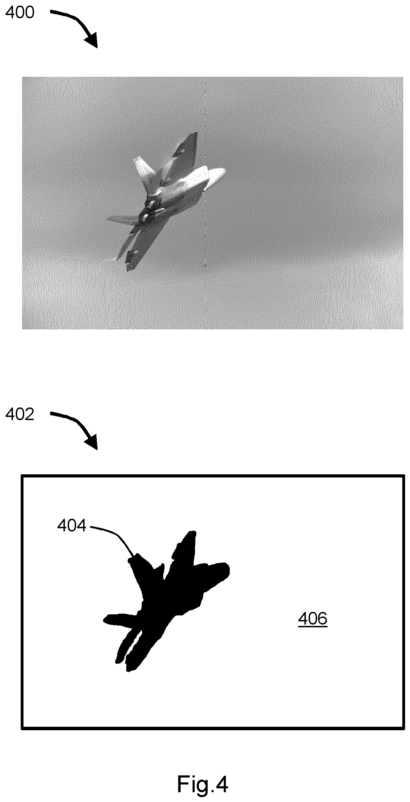

Referring now to Figs. 3 and 4, a structure of a machine-learning aircraft pose estimation model for use in a computer-implemented image processing method will be described, according to an embodiment of the present invention. For example, the machine learning aircraft pose estimation model 206 described above in relation to Fig. 2 may have a structure as shown in Fig. 3.

As shown in Fig. 3, the machine learning aircraft pose estimation model 300 according to the present embodiment comprises a segmentation stage 302, a position determining stage 304, and an orientation determining stage 306. In this way, various functions that are performed by the aircraft pose estimation model 300 are divided into discrete stages, which can offer advantages in terms of overcoming memory limitations. For example, if there is insufficient memory capacity in the system to load the entire aircraft pose estimation model 300 into operating memory at the same time, each stage of the model 300 may be loaded into the operating memory in turn, as and when required. However, in other embodiments the machine learning aircraft pose estimation model 206 may not be divided into discrete stages as shown in Fig. 3, for example when there is sufficient operating memory available to load the instructions for the entire model 206 into memory simultaneously.

As will be described in more detail below, information may be passed from one stage to the next in a restricted manner (in other words, some information that is generated by one stage may not be passed on to the next stage). Restricting the amount of information that has to be passed from one stage to the next in this way can further improve performance, by avoiding the need to temporarily retain large amounts of data in memory while loading the instructions to execute the next stage of the model. For example, in embodiments in which the segmentation stage 302 is configured to detect visual cues of heavy manoeuvring, this information could be provided as an output after the segmentation stage 302 (e.g. by displaying an indication of heavy manoeuvring as described above with reference to step 106 in Fig. 1), but the information may then be discarded instead of being passed to the position determining stage 304.

The segmentation stage 302 is configured to output a mask defining which pixels in the input image are estimated to be part of said one or more aircraft 404 and which pixels in the input image are estimated to be part of a background 406. In other words, the function of the segmentation stage 302 is to pick out the aircraft 404 from the background 406. For example, this may allow the subsequent stages of the model 300 to only process those pixels that are estimated to be part of the aircraft 404, reducing the processing burden on the position determining stage 304 and orientation determining stage 306 by avoiding these stages being used to process data from the background 406 part of the image 400. The segmentation stage 302 may be configured to perform semantic segmentation, which involves assigning each pixel in an image to one of a plurality of semantic classes (e.g. 'aircraft' or 'background'). Figure 4 illustrates an example of an input image 400 comprising an aircraft (top image in Fig. 4), together with the resulting mask 402 obtained from the input image 400 (bottom image in Fig. 4). In some embodiments, the segmentation stage is configured to determine the aircraft type of a respective one of said one or more aircraft.

The position determining stage 304 is configured to determine the position of each aircraft in the input image 400. In some embodiments, the position determining stage 304 may also determine the range to the aircraft. In this context, "position" refers to the position of the aircraft within the image 400 (e.g. in terms of x and y coordinates), whereas "range" refers to the distance between the camera and the aircraft (i.e. the depth coordinate, z).

The positioning determining stage 304 may use various techniques to determine the position of an aircraft in the input image 400, depending on the implementation. In the present embodiment, the position determining stage 304 is configured to determine the position of the aircraft based on the mask 402 that was generated by the segmentation stage 302. In the present embodiment, the position determining stage 304 determines the x coordinate by counting a number of votes for each one of a plurality of vertical lines in the image, and determining the x coordinate based on a position along the x axis of the vertical line having the most votes among the plurality of vertical lines. Similarly, the position determining stage 304 determines the y coordinate by counting a number of votes for each one of a plurality of horizontal lines in the image, and determining the y coordinate based on a position along the y axis of the horizontal line having the most votes among the plurality of horizontal lines. This approach may be referred to as 'centre voting'.

The orientation determining stage 306 is configured to determine the orientation of each of said one or more aircraft in the input image. In some embodiments the orientation determining stage 306 is configured to output the orientation of each of said one or more aircraft in the form of a quaternion, which can be an efficient way of expressing the orientation of each aircraft.

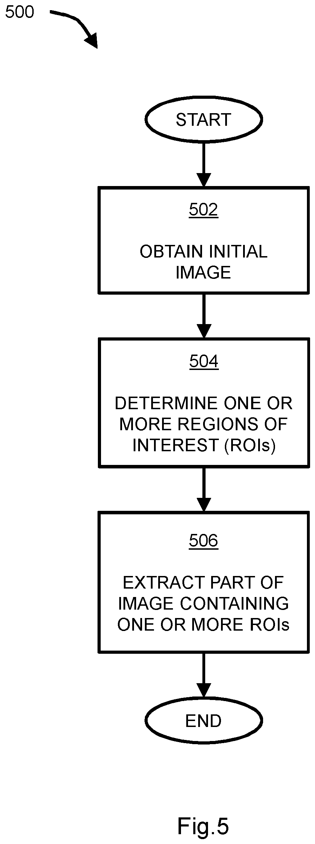

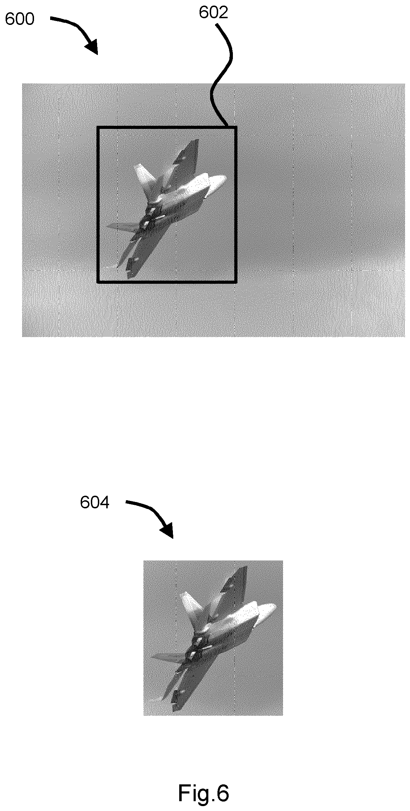

Referring now to Fig. 5, a pre-processing method 500 for obtaining an input image to be classified by a machine-learning aircraft pose estimation model will now be described, according to an embodiment of the present invention. Figure 6 illustrates an example of an image 600 containing an aircraft 602 (top image in Fig. 6), together with an example of an input image 604 having a smaller size that has been extracted from the initial image 600 (bottom image in Fig. 6).

First, in step 502 an initial image 600 having a larger size than the input image 604 is obtained. For example, the initial image 600 may comprise a full-resolution image as originally captured by a camera, i.e. without having been cropped or resized. However, in some embodiments the initial image 600 may have undergone some form of image processing prior to step 502, for example by resizing the image to reduce its resolution and therefore reduce the amount of data to be processed in the method of Fig. 5.

Next, in step 504 an object detection algorithm is applied to determine one or more regions of interest, ROIs 602, in the initial image 600. Here, object detection refers to the process of classifying an object (e.g. an aircraft) in and image and determining its location in the image. Depending on the embodiment, the shape recognition algorithm may be configured to determine an entire aircraft as being a ROI, and/or may be configured to determine part of an aircraft as being a ROI. The latter approach may be advantageous when dealing with images in which only part of an aircraft is visible, for example because a remaining part of the aircraft lies outside of the FOV of the camera or because the remaining part of the aircraft is occluded by another object or feature in the image.

Then, in step 506 a part of the initial image is extracted that contains one or more of said ROIs 602 as the input image 604 to be processed by the machine learning aircraft pose estimation model. This method can therefore be used to reduce the amount of data to be processed by the machine learning aircraft pose estimation model, by cropping out a smaller part 604 of a larger initial image 600.

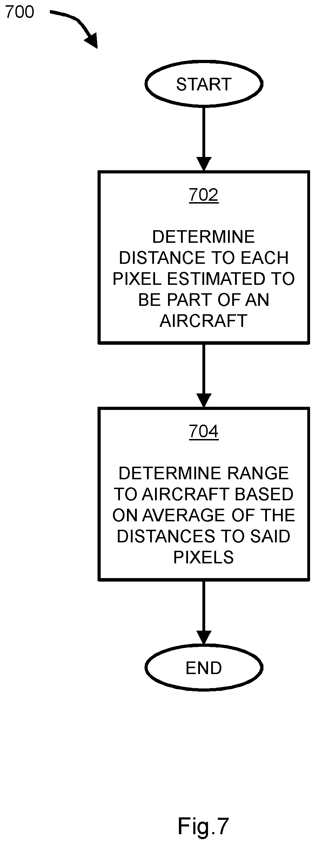

Referring now to Fig. 7, a flowchart is illustrated showing a method 700 of determining a range to an aircraft based on a mask obtained from an image of said aircraft, according to an embodiment of the present invention. For example, in embodiments in which functions of the machine learning aircraft pose estimation model are divided into discrete stages as shown in Fig. 3, the position determining stage 304 can use a method such as the one shown in Fig. 7 to determine the range to each aircraft (i.e. the z coordinate). However, in other embodiments the method of Fig. 7 may be implemented in a machine learning aircraft pose estimation model that is not subdivided into stages, or in a model that is divided into different stages to those shown in Fig. 3.

First, in step 702 a distance is determined for each one of the plurality of pixels that are estimated to be part of an aircraft, based on the mask 402 that was generated from the input image 400. In some embodiments, a distance for each pixel may be determined based on a nominal (e.g. predetermined) distance, for example 1,000 metres, to all pixels in the mask that are estimated to be part of the background. In embodiments in which an estimated depth value is outputted for each pixel in the form of a floating-point value scaled between e.g. 0.0 and 1.0, the depth value for a pixel can then be normalized and scaled based on the defined nominal distance to obtain the estimated distance for that pixel. Setting a nominal distance for the background in this way avoids potentially having an infinite distance assigned to the background, which could lead to difficulties in training the model (since the resulting depth values for pixels estimated to be part of an aircraft would typically only lie within a very small part of the range between 0.0 and 1.0).

Then, in step 704 the range to said aircraft is determined based on an average of the determined distances for each one of said plurality of pixels. For example, in step 704 the mean of the determined distances may be taken as the range to the aircraft.

Any system or apparatus feature as described herein may also be provided as a method feature, and vice versa. As used herein, means plus function features may be expressed alternatively in terms of their corresponding structure. In particular, method aspects may be applied to system or apparatus aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Whilst certain embodiments of the invention have been described herein with reference to the drawings, it will be understood that many variations and modifications will be possible without departing from the scope of the invention as defined in the accompanying claims.

## Claims

1. A computer-implemented image processing method (100) for performing pose estimation of aircraft, the method comprising:
obtaining (102) an input image; and
using (104) a machine-learning aircraft pose estimation model to obtain one or more aircraft parameters associated with one or more aircraft in the input image.

2. The method according to claim 1, wherein the input image is an image that may contain said one or more aircraft or may not contain any aircraft, and
wherein an output of the aircraft pose estimation model is indicative of whether the image does contain said one or more aircraft, and in the event that the output of the aircraft pose estimation model indicates that the image does contain said one or more aircraft, said output is further indicative of said one or more aircraft parameters.

3. The method according to claim 1 or claim 2, wherein said one or more aircraft parameters are indicative of one or more of:
a range to a respective one of said one or more aircraft;
an aircraft type of a respective one of said one or more aircraft;
an orientation of a respective one of said one or more aircraft; and
a position of a respective one of said one or more aircraft.

4. The method according to claim 3, wherein the machine-learning aircraft pose estimation model comprises:
a segmentation stage (302) configured to output a mask (402) defining which pixels in the input image (400) are estimated to be part of said one or more aircraft (404) and which pixels in the input image are estimated to be part of a background (406); and/or
a position determining stage (304) configured to determine the position of each of said one or more aircraft in the input image; and/or
an orientation determining stage (306) configured to determine the orientation of each of said one or more aircraft in the input image.

5. The method according to claim 4, wherein the position determining stage is further configured to determine the range to each of said one or more aircraft.

6. The method according to claim 5, wherein for each one of said one or more aircraft the position determining stage is configured to determine the range to said aircraft based on the mask outputted by the segmentation stage, by:
determining a distance (702) for each one of the plurality of pixels that are estimated to be part of said aircraft, based on the mask; and
determining the range (704) to said aircraft based on an average of the determined distances for each one of said plurality of pixels.

7. The method according to claim 6, wherein the position determining stage is configured to determine the range to each of said one or more aircraft by assigning a same predetermined distance to all pixels in the mask that are estimated to be part of the background.

8. The method according to any one of claims 3 to 7, wherein the machine-learning aircraft pose estimation model is configured to use centre voting to determine the position of each of said one or more aircraft.

9. The method according to claim 8, wherein the machine-learning aircraft pose estimation model is configured to determine the position of each of said one or more aircraft in terms of x, y coordinates by:
determining the x coordinate by counting a number of votes for each one of a plurality of vertical lines in the image, and determining the x coordinate based on a position along the x axis of the vertical line having the most votes among the plurality of vertical lines; and
determining the y coordinate by counting a number of votes for each one of a plurality of horizontal lines in the image, and determining the y coordinate based on a position along the y axis of the horizontal line having the most votes among the plurality of horizontal lines.

10. The method according to any one of the preceding claims, wherein obtaining the input image comprises:
obtaining (502) an initial image (600) having a larger size than the input image;
applying (504) a shape recognition algorithm to determine one or more regions of interest, ROIs (602), in the initial image; and
extracting (506) part of the initial image containing one or more of said ROIs as the input image (604) to be classified by the machine learning aircraft pose estimation model.

11. The method according to any one of the preceding claims, wherein the machine-learning aircraft pose estimation model is configured to detect one or more visual cues associated with heavy manoeuvring by one of said one or more aircraft and to output an indication of whether any such visual cues were detected, wherein heavy manoeuvring involves a change in velocity and/or direction of travel that exceeds a threshold.

12. The method according to any one of the preceding claims, wherein the method is implemented by one or more computer systems onboard an aircraft, for detecting one or more other aircraft substantially in real-time, and
wherein the input image comprises a part or a whole of an image captured by an imaging system onboard said aircraft in which the method is implemented.

13. A computer program comprising instructions which, when the program is executed by a computer, cause the computer to carry out the method of any one of the preceding claims.

14. A non-transitory computer-readable storage medium having stored thereon the computer program of claim 13.

15. A system (200) comprising:
one or more processors (202); and
computer-readable memory (204) storing computer program instructions which, when executed by the one or more processors, cause the system to:
obtain an input image; and
using a machine-learning aircraft pose estimation model (206) to obtain one or more aircraft parameters associated with one or more aircraft in the input image.
